# FASCICULE DE BREVET EUROPEEN

(11) **EP 2 902 167 B1**
(45) Date de publication et mention de la délivrance du brevet: **18.04.2018**
(21) Numéro de dépôt: 15152413.9
(22) Date de dépôt: 23.01.2015
(51) Int. Cl.: B29L 31/58, D05B 35/06, B29C 44/14, B29C 44/34, B60N 2/48, B60N 2/58, B60N 2/70

(54) **Procédé de réalisation d'un composant de garnissage de siège de véhicule automobile**
Verfahren zur Herstellung einer Polsterkomponente für den Sitz eines Kraftfahrzeugs
Method for producing a trim component of a motor vehicle seat

(30) Priorité: 30.01.2014 FR 1450760
(43) Date de publication de la demande: 05.08.2015
(73) Titulaire: Cera TSC, 75008 Paris (FR)
(72) Inventeur: Patte, Damien, 51490 Epoye (FR); Mougel, Thierry, 08160 Balaives et Butz (FR); Sellier, Marie-José, 02340 Dizy le Gros (FR)
(74) Mandataire: Sayettat, Julien Christian

(56) Documents cités:
- WO-A1-2011/083098
- FR-A1- 2 983 112
- FR-A5- 2 177 136

## Description

L'invention concerne un procédé de réalisation d'un composant de garnissage de siège de véhicule automobile et un composant obtenu par un tel procédé. Le document WO2011/083098 A1 divulgue un procédé de réalisation d'un composant de garnissage de siège de véhicule comprenant l'association par une couture de deux empiècements de matériau de revêtement et d'un élément profilé de finition d'une zone de couture. Il est connu de mettre en oeuvre un procédé de réalisation d'un composant de garnissage de siège de véhicule automobile, ledit procédé comprenant les étapes suivantes :
- prévoir deux empiècements de matériau de revêtement, lesdits empiècements comprenant chacun une face d'endroit, une face d'envers et une bordure de liaison,
- prévoir un élément profilé de finition d'une zone de couture, ledit élément comprenant un bourrelet d'aspect et une excroissance radiale formant partie d'association auxdites bordures,
- prévoir une bande souple d'étanchéité à la mousse,
ledit procédé comprenant en outre les étapes suivantes :
- associer par une première couture la partie d'association dudit élément à la bordure d'un des empiècements, le bord libre de ladite excroissance étant mis du même côté que celui de ladite bordure,
- associer par une deuxième couture lesdites bordures disposées en regard l'une de l'autre, face d'endroit vers face d'endroit, les bords libres desdites bordures étant disposés du même côté, ledit élément étant inséré entre lesdites bordures, ladite bande étant repliée en deux dans sa longueur pour masquer les faces d'envers et bords libres desdites bordures et le bord libre de ladite partie d'association et pour être prise dans ladite couture.
En outre, dans le cas où l'élément de finition comprend une âme sous forme d'un profilé en matériau plastique extrudé, ledit élément comprenant en outre une ganse souple repliée en deux dans sa longueur pour loger ladite âme et former le bourrelet, ladite ganse comprenant deux parties latérales saillant radialement pour former la partie d'association, il est usuellement prévu une troisième couture destinée à permettre le maintien de ladite âme dans son logement, de manière à disposer d'un élément pré-associé prêt à être associé en l'état à la bordure d'un empiècement par la première couture.

Il est également connu de mettre en oeuvre les étapes suivantes :
- retourner les empiècements de manière à obtenir une coiffe dont la face d'endroit est tournée vers l'extérieur,
- disposer ladite coiffe dans un moule,
- injecter dans ladite coiffe un mélange précurseur de mousse élastiquement compressible de manière à obtenir un composant sous forme de matelassure comprenant ladite coiffe surmoulée sur son envers par un bloc de rembourrage en mousse élastiquement compressible.

D'où l'intérêt d'avoir prévu une bande d'étanchéité permettant d'éviter toute fuite de mousse au niveau de la couture.

On le voit, les réalisations connues prévoient de deux à trois coutures pour obtenir le composant de garnissage, ce qui a un impact évident en termes de complexité de réalisation et de coût.

L'invention a pour but de proposer un procédé économique permettant de simplifier la réalisation du composant et donc de réduire son coût.

A cet effet, et selon un premier aspect, l'invention propose un procédé de réalisation d'un composant de garnissage de siège de véhicule automobile, ledit procédé comprenant les étapes suivantes :
- prévoir deux empiècements de matériau de revêtement, lesdits empiècements comprenant chacun une face d'endroit, une face d'envers et une bordure de liaison,
- prévoir un élément profilé de finition d'une zone de couture, ledit élément comprenant un bourrelet d'aspect et une excroissance radiale formant partie d'association auxdites bordures,
- prévoir une bande souple d'étanchéité à la mousse,
ledit procédé comprenant en outre l'étape d'amener séparément et simultanément en regard d'une aiguille à coudre alimentée par un fil de couture :
- lesdites bordures disposées en regard l'une de l'autre, face d'endroit vers face d'endroit, les bords libres desdites bordures étant disposés du même côté,
- ledit élément inséré entre lesdites bordures, le bord libre de ladite partie d'association étant mis du même côté que ceux desdites bordures,
- ladite bande repliée en deux dans sa longueur pour masquer les faces d'envers et bords libres desdites bordures et le bord libre de ladite partie d'association,
une couture unique étant réalisée de manière à associer entre eux lesdites bordures, ledit élément et ladite bande.

Le fait d'amener « séparément et simultanément » les bordures, l'élément et la bande signifie qu'on ne réalise aucun pré-assemblage préliminaire, la couture unique assurant à elle seule la liaison entre eux.

Par « élément profilé » on entend un élément dont la section transversale - c'est à dire perpendiculaire à sa direction d'extension - est sensiblement homogène.

Avec l'agencement proposé, mettant en oeuvre une couture unique, on simplifie la réalisation du composant et on réduit son coût.

Selon un deuxième aspect, l'invention propose un composant réalisé par un tel procédé.

D'autres particularités et avantages de l'invention apparaîtront dans la description qui suit, faite en référence aux figures jointes, dans lesquelles :

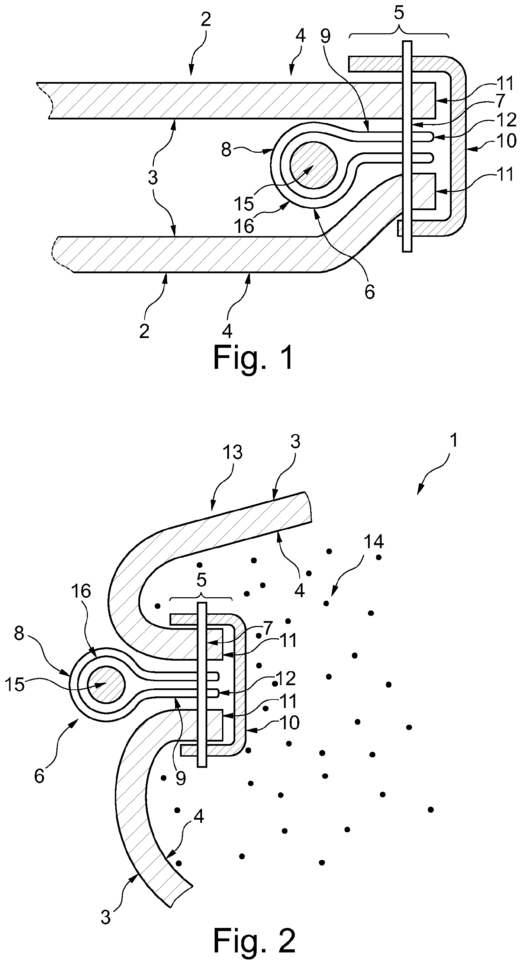

- la figure 1 est une vue schématique partielle en coupe d'un composant en cours de réalisation, selon un mode de réalisation,
- la figure 2 est une vue schématique partielle en coupe du composant de la figure 1 à l'état fini,
- la figure 3 est une vue schématique en perspective d'un dispositif de guidage, en regard d'une aiguille à coudre, représentant en outre une âme, une ganse, et une bande d'étanchéité,
- la figure 4 est une vue en coupe, selon un plan P, du dispositif de la figure 3, représentant en outre les empiècements, l'âme, la ganse, et la bande d'étanchéité.

En référence aux figures, on décrit un procédé de réalisation d'un composant 1 de garnissage de siège de véhicule automobile, ledit procédé comprenant les étapes suivantes :
- prévoir deux empiècements 2 de matériau de revêtement, lesdits empiècements comprenant chacun une face d'endroit 3, une face d'envers 4 et une bordure 5 de liaison,
- prévoir un élément 6 profilé de finition d'une zone de couture, ledit élément comprenant un bourrelet 8 d'aspect et une excroissance radiale formant partie d'association 9 auxdites bordures,
- prévoir une bande 10 souple d'étanchéité à la mousse, notamment sous forme de film en matériau plastique,
ledit procédé comprenant en outre l'étape d'amener séparément et simultanément en regard d'une aiguille 21 à coudre alimentée par un fil de couture :
- lesdites bordures disposées en regard l'une de l'autre, face d'endroit vers face d'endroit, les bords libres 11 desdites bordures étant disposés du même côté,
- ledit élément inséré entre lesdites bordures, le bord libre 12 de ladite partie d'association étant mis du même côté que ceux 11 desdites bordures,
- ladite bande repliée en deux dans sa longueur pour masquer les faces d'envers 4 et bords libres 11 desdites bordures et le bord libre 12 de ladite partie d'association,
une couture 7 unique étant réalisée de manière à associer entre eux lesdites bordures, ledit élément et ladite bande.

Le procédé comprend en outre les étapes de :
- retourner les empiècements 2 de manière à obtenir une coiffe 13 dont la face d'endroit 3 est tournée vers l'extérieur,
- disposer ladite coiffe dans un moule,
- injecter dans ladite coiffe un mélange précurseur de mousse élastiquement compressible de manière à obtenir un composant 1 sous forme de matelassure comprenant ladite coiffe surmoulée sur son envers par un bloc 14 de rembourrage en mousse élastiquement compressible.

Le matériau de revêtement, notamment en tissu, est rendu étanche à la mousse notamment par le fait qu'il est pourvu d'une sous couche, non représentée, en mousse élastiquement compressible de quelques millimètres d'épaisseur.

Selon la réalisation représentée, l'élément 6 de finition comprend une âme 15 sous forme d'un profilé en matériau plastique extrudé, ledit élément comprenant en outre une ganse 16 souple repliée en deux dans sa longueur pour loger ladite âme et former le bourrelet 8, ladite ganse comprenant en outre deux parties latérales saillant radialement pour former la partie d'association 9, l'insertion dudit élément entre les bordures 5 des empiècements 2 étant réalisée en amenant séparément et simultanément ladite âme et ladite ganse en regard de l'aiguille 21 à coudre.

On le voit, aucune confection préalable de l'élément 6 par couture n'est requise, ce qui simplifie d'autant le procédé de fabrication du composant 1.

En variante non représentée, l'élément 6 de finition est prévu sous forme d'un profilé en matériau plastique extrudé, ledit profilé comprenant une partie cylindrique formant bourrelet 8 et une partie en lame saillant radialement pour former la partie d'association 9.

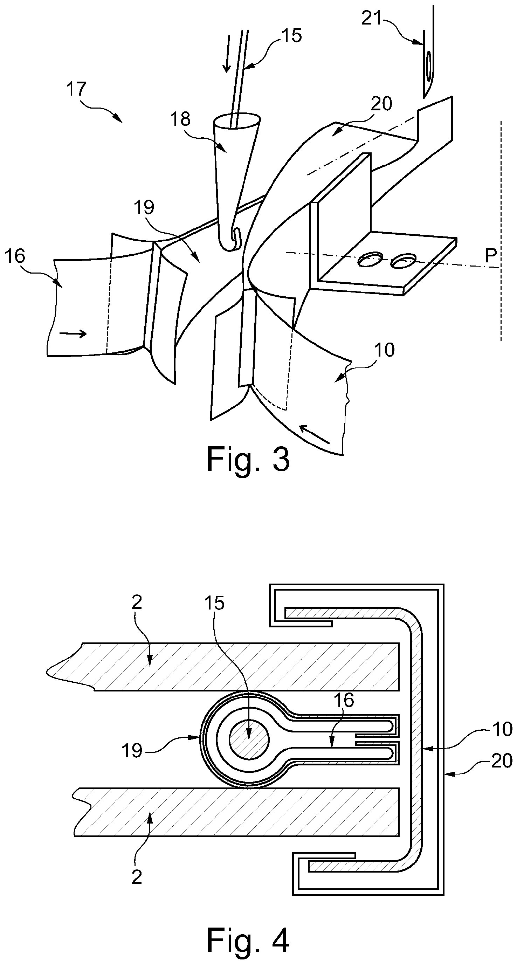

En référence aux figures 3 et 4, on décrit à présent un dispositif de guidage 17, en regard d'une aiguille 21 à coudre, d'une âme 15, d'une ganse 16, et d'une bande d'étanchéité 10.

Le dispositif 17 comprend, de façon non représentée, des systèmes d'alimentation, en continu d'une âme 15, d'une ganse 16, et d'une bande d'étanchéité 10.
L'âme 15 est acheminée par un conduit 18, ici en forme générale d'entonnoir.
La ganse 16 est acheminée par un premier guide 19 adoptant progressivement, comme représenté en figure 4, une section en premier U permettant de loger ladite ganse repliée, l'âme 15 se logeant dans ladite ganse, les extrémités dudit U étant repliées d'un demi-tour vers l'intérieur, de façon à maintenir ladite ganse dans ledit U.
La bande d'étanchéité 10 est acheminée par un deuxième guide 20 adoptant progressivement, comme représenté en figure 4, une section en deuxième U permettant de loger ladite bande repliée, les extrémités dudit U étant repliées d'un demi-tour vers l'intérieur, de façon à maintenir ladite bande dans ledit U, ledit deuxième U étant tourné à l'opposé du premier U et ledit premier U étant logé dans ledit deuxième U.

Chaque empiècement 2 est positionné manuellement entre les guides 19, 20, entre une branche du premier U et la branche correspondante du deuxième U.
On décrit enfin un composant 1 de garnissage de siège de véhicule automobile, ledit composant étant réalisé par le procédé sus décrit, ledit composant comprenant une coiffe 13, ladite coiffe comprenant :
- deux empiècements 2 de matériau de revêtement, lesdits empiècements comprenant chacun une face d'endroit 3, une face d'envers 4 et une bordure 5 de liaison,
- un élément 6 profilé de finition d'une zone de couture 7, ledit élément comprenant un bourrelet 8 d'aspect et une excroissance radiale formant partie d'association 9 auxdits empiècements,
- une bande 10 souple d'étanchéité à la mousse,
ladite coiffe présentant les caractéristiques suivantes :
- lesdites bordures sont disposées en regard l'une de l'autre, face d'endroit 3 vers face d'endroit 3, les bords libres 11 desdites bordures étant disposés du même côté,
- ledit élément est inséré entre lesdites bordures, le bord libre 12 de ladite partie d'association étant mis du même côté que ceux desdites bordures,
- ladite bande est repliée en deux dans sa longueur pour masquer les faces d'envers 4 et bords libres 11 desdites bordures et le bord libre 12 de ladite partie d'association,
une couture 7 unique étant disposée de manière à associer entre eux lesdites bordures, ledit élément et ladite bande, ladite coiffe étant surmoulée en face d'envers 4 par un bloc 14 de rembourrage en mousse élastiquement compressible.

## Revendications

1. Procédé de réalisation d'un composant (1) de garnissage de siège de véhicule automobile, ledit procédé comprenant les étapes suivantes :
• prévoir deux empiècements (2) de matériau de revêtement, lesdits empiècements comprenant chacun une face d'endroit (3), une face d'envers (4) et une bordure (5) de liaison,
• prévoir un élément (6) profilé de finition d'une zone de couture, ledit élément comprenant un bourrelet (8) d'aspect et une excroissance radiale formant partie d'association (9) auxdites bordures,
• prévoir une bande (10) souple d'étanchéité à la mousse,
ledit procédé comprenant en outre l'étape d'amener séparément et simultanément en regard d'une aiguille (21) à coudre alimentée par un fil de couture :
• lesdites bordures disposées en regard l'une de l'autre, face d'endroit vers face d'endroit, les bords libres (11) desdites bordures étant disposés du même côté,
• ledit élément inséré entre lesdites bordures, le bord libre (12) de ladite partie d'association étant mis du même côté que ceux (11) desdites bordures,
• ladite bande repliée en deux dans sa longueur pour masquer les faces d'envers (4) et bords libres (11) desdites bordures et le bord libre (12) de ladite partie d'association,
une couture (7) unique étant réalisée de manière à associer entre eux lesdites bordures, ledit élément et ladite bande.

2. Procédé selon la revendication 1, **caractérisé en ce qu'**il comprend en outre les étapes de :
• retourner les empiècements (2) de manière à obtenir une coiffe (13) dont la face d'endroit (3) est tournée vers l'extérieur,
• disposer ladite coiffe dans un moule,
• injecter dans ladite coiffe un mélange précurseur de mousse élastiquement compressible de manière à obtenir un composant (1) sous forme de matelassure comprenant ladite coiffe surmoulée sur son envers par un bloc (14) de rembourrage en mousse élastiquement compressible.

3. Procédé selon l'une des revendications 1 ou 2, **caractérisé en ce que** l'élément (6) de finition comprend une âme (15) sous forme d'un profilé en matériau plastique extrudé, ledit élément comprenant en outre une ganse (16) souple repliée en deux dans sa longueur pour loger ladite âme et former le bourrelet (8), ladite ganse comprenant en outre deux parties latérales saillant radialement pour former la partie d'association (9), l'insertion dudit élément entre les bordures (5) des empiècements (2) étant réalisée en amenant séparément et simultanément ladite âme et ladite ganse en regard de l'aiguille (21) à coudre.

4. Procédé selon l'une des revendications 1 ou 2, **caractérisé en ce que** l'élément (6) de finition est prévu sous forme d'un profilé en matériau plastique extrudé, ledit profilé comprenant une partie cylindrique formant bourrelet (8) et une partie en lame saillant radialement pour former la partie d'association (9).

5. Composant (1) de garnissage de siège de véhicule automobile, ledit composant étant réalisé par un procédé selon l'une quelconque des revendications 2 à 4, ledit composant comprenant une coiffe (13), ladite coiffe comprenant :
• deux empiècements (2) de matériau de revêtement, lesdits empiècements comprenant chacun une face d'endroit (3), une face d'envers (4) et une bordure (5) de liaison,
• un élément (6) profilé de finition d'une zone de couture, ledit élément comprenant un bourrelet (8) d'aspect et une excroissance radiale formant partie d'association (9) auxdits empiècements,
• une bande (10) souple d'étanchéité à la mousse,
ladite coiffe présentant les caractéristiques suivantes :
• lesdites bordures sont disposées en regard l'une de l'autre, face d'endroit (3) vers face d'endroit (3), les bords libres (11) desdites bordures étant disposés du même côté,
• ledit élément est inséré entre lesdites bordures, le bord libre (12) de ladite partie d'association étant mis du même côté que ceux desdites bordures,
• ladite bande est repliée en deux dans sa longueur pour masquer les faces d'envers (4) et bords libres (11) desdites bordures et le bord libre (12) de ladite partie d'association,
une couture (7) unique étant disposée de manière à associer entre eux lesdites bordures, ledit élément et ladite bande, ladite coiffe étant surmoulée en face d'envers par un bloc (14) de rembourrage en mousse élastiquement compressible.

## Patentansprüche

1. Verfahren zur Herstellung eines Polsterungsbauteils (1) eines Kraftfahrzeugsitzes, wobei das Verfahren die folgenden Schritte umfasst:
- Vorsehen von zwei Einsätzen (2) aus Beschichtungsmaterial, wobei die Einsätze jeweils eine Vorderseite (3), eine Rückseite (4) und eine Verbindungsbordüre (5) umfassen,
- Vorsehen eines Endfertigungsprofilelements (6) einer Nahtzone, wobei das Element einen Dekorwulst (8) und eine radiale Ausstülpung, die einen Verbindungsteil (9) mit den Bordüren bildet, umfasst,
- Vorsehen eines geschmeidigen Bands (10) zur Abdichtung gegen Schaumstoff,
wobei das Verfahren außerdem den Schritt des separaten und gleichzeitigen Zuführens gegenüber einer Nähnadel (21), die mit einem Nähgarn versorgt ist, umfasst:
- der Bordüren, die einander gegenüberliegend, Vorderseite zu Vorderseite, angeordnet sind, wobei die freien Ränder (11) der Bordüren auf derselben Seite angeordnet sind,
- des Elements, das zwischen die Bordüren eingefügt ist, wobei der freie Rand (12) des Verbindungsteils auf derselben Seite wie die (11) der Bordüren gegeben wird,
- des Bands in seiner Länge in zwei gefaltet, um die Rückseiten (4) und freien Ränder (11) der Bordüren und den freien Rand (12) des Verbindungsteils abzudecken, wobei eine einzige Naht (7) derart ausgeführt wird, dass die Bordüren, das Element und das Band miteinander verbunden sind.

2. Verfahren nach Anspruch 1, **dadurch gekennzeichnet, dass** es außerdem die folgenden Schritte umfasst:
- Umdrehen der Einsätze (2) derart, dass eine Haube (13) erhalten wird, deren Vorderseite (3) nach außen gerichtet ist,
- Anordnen der Haube in einer Form,
- Einspritzen in die Haube eines Vorläufergemischs aus elastisch komprimierbarem Schaumstoff derart, dass ein Bauteil (1) in Stepppolsterungsform erhalten wird, das die aufgeformte Haube auf seiner Rückseite durch einen Füllungsblock (14) aus elastisch komprimierbarem Schaumstoff umfasst.

3. Verfahren nach einem der Ansprüche 1 oder 2, **dadurch gekennzeichnet, dass** das Endfertigungselement (6) eine Seele (15) in Form eines Profils aus extrudiertem Kunststoff umfasst, wobei das Element außerdem eine biegsame Besatzschnur (16) umfasst, die in ihre Länge in zwei gefaltet ist, um die Seele aufzunehmen und den Wulst (8) zu bilden, wobei die Besatzschnur außerdem zwei seitliche Teile umfasst, die radial vorstehen, um den Verbindungsteil (9) zu bilden, wobei das Einfügen des Elements zwischen die Bordüren (5) der Einsätze (2) ausgeführt wird, indem die Seele und die Besatzschnur separat und gleichzeitig gegenüber der Nähnadel (21) zugeführt werden.

4. Verfahren nach einem der Ansprüche 1 oder 2, **dadurch gekennzeichnet, dass** das Endfertigungselement (6) in Form eines Profils aus extrudiertem Kunststoff vorgesehen ist, wobei das Profil einen zylindrischen Teil umfasst, der einen Wulst (8) bildet, und einen Teil in radial vorstehender Klinge, um den Verbindungsteil (9) zu bilden.

5. Polsterungsbauteil (1) eines Kraftfahrzeugsitzes, wobei das Bauteil durch ein Verfahren nach einem der Ansprüche 2 bis 4 hergestellt ist, wobei das Bauteil eine Haube (13) umfasst, wobei die Haube Folgendes umfasst:
- zwei Einsätze (2) aus Beschichtungsmaterial, wobei die Einsätze jeweils eine Vorderseite (3), eine Rückseite (4) und eine Verbindungsbordüre (5) umfassen,
- ein Endfertigungsprofilelement (6) einer Nahtzone, wobei das Element einen Dekorwulst (8) und eine radiale Ausstülpung umfasst, die den Verbindungsteil (9) mit den Einsätzen bilden,
- ein geschmeidiges Band (10) zur Abdichtung gegen Schaumstoff,
wobei die Haube die folgenden Merkmale aufweist:
- die Bordüren sind einander gegenüberliegend, Vorderseite (3) zu Vorderseite (3), angeordnet, wobei die freien Ränder (11) der Bordüren auf derselben Seite angeordnet sind,
- das Element ist zwischen die Bordüren eingefügt, wobei der freie Rand (12) des Verbindungsteils auf dieselbe Seite gegeben wird wie die der Bordüren,
- das Band ist in seine Längsrichtung in zwei gefaltet, um die Rückseiten (4) und freien Ränder (11) der Bordüren und den freien Rand (12) des Verbindungsteils abzudecken, wobei eine einzige Naht (7) derart angeordnet ist, dass die Bordüren, das Element und das Band miteinander verbunden werden, wobei die Haube auf der Rückseite durch einen Füllungsblock (14) aus elastisch komprimierbarem Schaumstoff aufgeformt ist.

## Claims

1. A method for making a seat upholstery component (1) for a motor vehicle, said method comprising the following steps:
- providing two inserts (2) of lining material, said inserts each comprising a front face (3), a back face (4) and a joining edge (5),
- providing a profiled finishing element (6) of a stitching area, said element comprising an appearance bead (8) and a radial outgrowth forming an attachment part (9) of said edges,
- providing a flexible band (10) for leakproofness to foam,
said method further comprising separately and simultaneously bringing the following opposite a sewing needle (21) fed by a stitching thread:
- said edges arranged facing each other, front face to front face, the free ends (11) of said edges being arranged on the same side,
- said element inserted between said edges, the free end (12) of said attachment part being placed on the same side as said ends (11) of said edges,
- said band is folded in two lengthwise to cover the back faces (4) and free ends (11) of said edges and the free end (12) of said attachment part,
a sole stitching (7) being stitched so as to attach said edges, said element and said band.

2. A method according to claim 1, **characterized in that** it further comprises steps of:
- returning the inserts (2) so as to obtain a cover (13) the front face of which (3) is facing the outside,
- arranging said cover in a mould,
- injecting a precursor mixture of elastically compressible foam into said cover so as to obtain a component (1) in the form of a quilt comprising said cover overmoulded onto the back thereof by a block (14) of padding made of elastically compressible foam.

3. A method according to claim 1 or 2, **characterized in that** the finishing element (6) comprises a core (15) in the form a profile made of extruded plastic material, said element further comprising a flexible loop (16) folded in two lengthwise to house said core and form the bead (8), said loop further comprising two lateral parts protruding radially to form the attachment part (9), insertion of said element between the edges (5) of the inserts (2) being carried out by separately and simultaneously bringing said core and said loop opposite the sewing needle (21).

4. A method according to claim 1 or 2, **characterized in that** the finishing element (6) is provided in the form of a profile made of extruded plastic material, said profile comprising a cylindrical part forming a bead (8) and a radially protruding blade part to form an attachment part (9) .

5. A seat upholstery component (1) for a motor vehicle, said component being made using a method according to any one of claims 2 to 4, said component comprising a cover (13), said cover comprising:
- two inserts (2) of lining material, said inserts each comprising a front face (3), a back face (4) and a joining edge (5),
- a profiled finishing element (6) of a stitching area, said element comprising an appearance bead (8) and a radial outgrowth forming an attachment part (9) of said inserts,
- a flexible band (10) for leakproofness to foam,
said cover presenting the following features:
- said edges arranged facing each other, front face (3) to front face (3), the free ends (11) of said edges being arranged on the same side,
- said element inserted between said edges, the free end (12) of said attachment part being placed on the same side as said ends (11) of said edges,
- said band is folded in two lengthwise to cover the back faces (4) and free ends (11) of said edges and the free end (12) of said attachment part,
a sole stitching (7) being arranged so as to attach said edges, said element and said element and said band, said cover being overmoulded on the back face by a block (14) of padding made of elastically compressible foam.
